# FASCICULE DE BREVET EUROPEEN

(11) **EP 2 865 951 B1**
(45) Date de publication et mention de la délivrance du brevet: **20.07.2016**
(21) Numéro de dépôt: 14189476.6
(22) Date de dépôt: 20.10.2014
(51) Int. Cl.: F24D 5/02, F24D 17/00, F24D 17/02, F24D 19/10, F24F 5/00, F24F 13/04

(54) **Installation de production d'eau chaude thermodynamique**
Thermodynamische Anlage zur Erzeugung von Warmwasser
Thermodynamic facility for producing hot water

(30) Priorité: 22.10.2013 FR 1302441
(43) Date de publication de la demande: 29.04.2015
(73) Titulaire: Systovi, 44608 St Herblain (FR)
(72) Inventeur: Benabdelkarim, Mohamed, 44000 Nantes (FR); Janot, Pascal, 44000 Nantes (FR)
(74) Mandataire: Tournel, Jean Louis

(56) Documents cités:
- EP-A1- 2 159 504
- WO-A2-2010/049225
- DE-A1- 10 144 148
- DE-A1- 19 902 650
- FR-A1- 2 979 976
- FR-A3- 2 537 704

## Description

L'invention se rapporte à une installation de production d'eau chaude par récupération de calories dite installation thermodynamique.

Pour produire de l'eau chaude, on connait le ballon de production d'eau chaude qui consiste en un réservoir isolé thermiquement contenant un volume d'eau que l'on chauffe au moyen d'un générateur de thermies.

Ce générateur de thermies est souvent une résistance électrique alimentée par le courant électrique distribué par un fournisseur. Un tel ballon fonctionne selon deux modes. Dans le premier cas un capteur mesure la température de l'eau dans le réservoir et commande le fonctionnement d'une résistance électrique pour maintenir l'eau à une température donnée. Dans le second cas, une horloge horaire pilote la résistance qui n'est autorisée à fonctionner que pendant une plage horaire durant laquelle plage le coût du courant consommé est réduit.

Il est connu de remplacer la résistance électrique par un bruleur à gaz.

On connait également, comme source de chaleur, les panneaux solaires qui utilisent un fluide caloporteur pour chauffer l'eau du ballon via un échangeur. Le fluide caloporteur est véhiculé au moyen d'une pompe alimentée par du courant électrique provenant d'un distributeur.

Au lieu et place des panneaux solaires, il est connu d'utiliser une pompe à chaleur récupérant les calories dans l'eau d'un puits ou dans l'air, la pompe à chaleur étant alimentée par du courant provenant d'un fournisseur. Pour le pompage des calories dans l'air, lorsqu'il fait froid la capacité de la pompe à chaleur se réduit.

Une pompe à chaleur basée sur le prélèvement des calories dans l'air comprend un échangeur de chaleur entre un circuit primaire et un circuit secondaire et un moyen de circulation de l'air vers l'échangeur. Il est nécessaire de traiter un gros volume d'air de l'ordre de 300 m3/H. L'ensemble échangeur de chaleur et moyen de circulation est situé dans une même enveloppe ou bien le moyen de circulation est disposé immédiatement à coté de l'échangeur *(*DE 199 02 650 *ou* FR 2979976*).* Traiter un gros volume d'air induit un bruit important. Le document DE 199 02 650 divulgue le préamble de la revendication 1.

L'invention vise à créer une installation de production d'eau chaude par récupération de calories dans l'air mettant en oeuvre un réservoir destiné à contenir de l'eau et une pompe à chaleur qui soit autonome et qui soit discrète.

A cet effet, l'invention a pour objet une installation de production d'eau chaude Sanitaire selon la revendication 1.

L'invention sera bien comprise à l'aide de la description ci après faite à titre d'exemple non limitatif en regard du dessin qui représente :

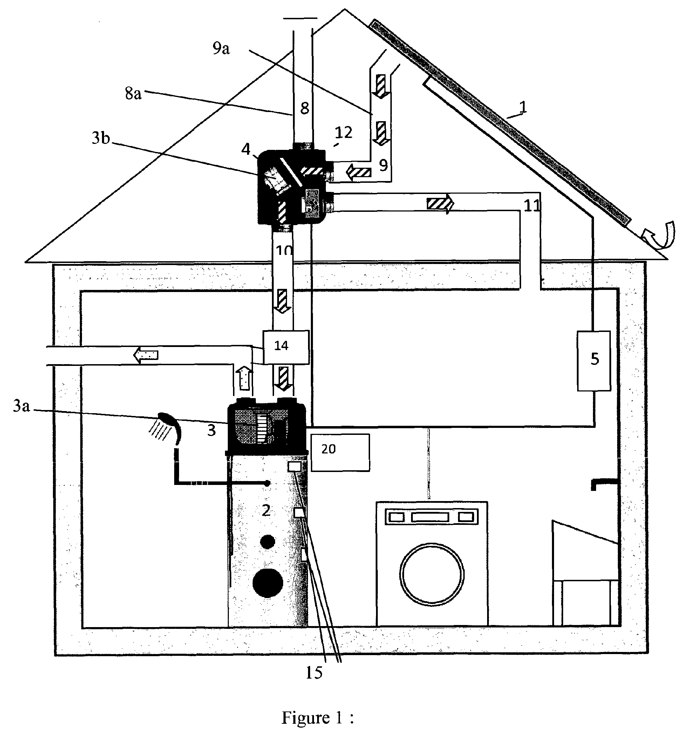

FIG 1 une installation selon l'invention

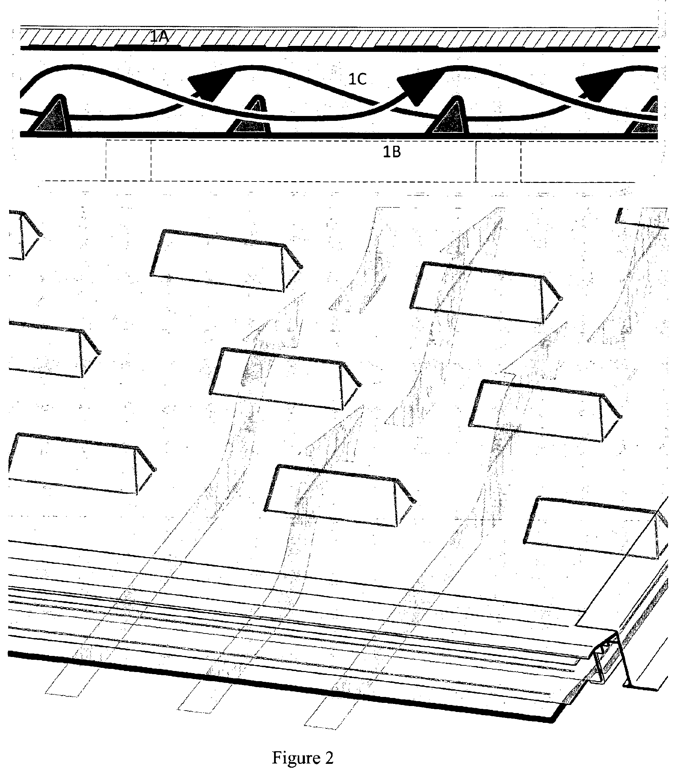

FIG 2 : un panneau photovoltaïque
FIG 3 : une variante d'une installation

En se reportant au dessin, on voit, dans une habitation, une installation de production d'eau chaude par récupération de calories dans l'air mettant en oeuvre un réservoir 2 destiné à contenir de l'eau et une pompe 3 à chaleur destinée à chauffer l'eau contenue dans le réservoir.

Ce réservoir est encore appelé ballon thermodynamique.

La pompe 3 à chaleur est un dispositif qui extrait la chaleur d'un fluide provenant d'une source ici de l'air et la restitue à l'eau du ballon. On utilise un échangeur de chaleur 3a , par exemple à plaques, et un moyen 3b de circulation d'air qui fait passer l'air au travers de l'échangeur.

L'air est acheminé vers l'échangeur 3a par un extracteur/souffleur 3b, contenu dans un caisson 4 dit de mélange, créant une dépression en amont de l'extracteur/souffleur et une surpression en aval. Avantageusement ce caisson est déporté loin du réservoir et de l'échangeur et il est placé notamment en sous toiture. Une mesure de température est réalisée en amont du caisson 4 de mélange et immédiatement en aval du caisson de mélange sur la conduite 9b qui achemine l'air mélangé vers l'échangeur de chaleur. Un conduit 8a reliant l'extérieur de l'habitation et le caisson permet d'introduire un deuxième flux d'air dans le caisson 4 de mélange.

L'installation comprend d'une part, au moins un panneau (1) photovoltaïque lequel produit du courant qui alimente, de préférence, directement les moyens électriques de l'installation tel le compresseur de la pompe à chaleur ainsi que l'extracteur /souffleur contenu, ici dans un caisson et d'autre part, un circuit d'air qui, pour alimenter la pompe à chaleur, le prélève à l'extérieur , le fait circuler au contact du panneau 1 photovoltaïque pour refroidir le dit panneau et par la même réchauffer l'air envoyé dans l'échangeur de la pompe à chaleur. Lorsqu'il est dit que le courant alimente directement le compresseur et l'extracteur, il est sous entendu que le courant produit par le panneau photovoltaïque est cependant mis en forme par un onduleur 5.

Le propriétaire consomme son propre courant. Le panneau photovoltaïque (1) présente une paroi (1A) constituée par les éléments photosensibles produisant du courant et sous cette paroi et à distance de celle ci, une paroi inférieure (1B) délimitant un canal (1C) dans lequel est introduit de l'air extérieur à réchauffer. Cette introduction se fait à la base du panneau et l'air réchauffé est prélevé en haut dudit panneau.

Il peut y avoir un groupe de deux ou plus de panneaux dans lesquels circule l'air de refroidissement.

Dans un panneau solaire, le courant électrique est produit par les rayons du soleil frappant les éléments sensibles. Le rayonnement solaire fourni non seulement de l'énergie aux cellules photovoltaïques (les photons) mais également de l'énergie infra-rouge qui élève la température des cellules. Malheureusement les cellules photovoltaïques sont sensibles à la chaleur et leurs rendements diminuent lorsqu'elles dépassent une température de l'ordre de 25° Celsius.

En prévoyant un canal sous la paroi 1A composée des cellules photovoltaïques non seulement on diminue la température des cellules photovoltaïques et donc on augmente leurs rendements, mais on vient réchauffer de l'air qui est dirigé vers la pompe à chaleur. L'air entrant dans cette pompe à chaleur étant plus chaud que l'air ambiant, le différentiel de température améliore l'efficacité de l'échange surtout l'hiver. Plus l'air acheminé à l'évaporateur (échangeur) de la pompe à chaleur est chaud, moins le compresseur consomme de l'énergie électrique pour en extraire les calories cependant l'air ne doit pas être trop chaud.

L'installation consomme donc à la fois le courant produit par les cellules photovoltaïques et l'air réchauffé par le panneau. Elle est donc autonome sous réserve du dimensionnement des panneaux photovoltaïques et du volume d'eau à chauffer. Le chauffage de l'eau du réservoir ne peut se faire que le jour sauf si on a prévu des batteries chargées par le ou les panneaux photovoltaïques ou s'alimenter sur le réseau de distribution collective.

L'air est donc aspiré au travers du panneau photovoltaïque et acheminé vers l'échangeur de chaleur au moyen d'un circuit d air lequel présente un module 4 dite de mélange et de distribution tel une boite comportant une arrivée (8) d'air frais provenant de l'extérieur, une arrivée 9 de l'air réchauffé, une sortie (10) vers l'échangeur et une sortie (11) pour insuffler de l'air dans l'habitat. Des volets situés sur les entrées et sorties contrôlent la section de passage des conduites et donc les volumes ou débits d'air transitant dans les conduites en parallèle avec la vitesse de rotation de l'extracteur turbine.

Des capteurs de température localisés dans le ballon d'eau chaude à différents niveaux, en amont des entrées d'air et en aval informent un calculateur qui pilote les volets du caisson mélangeur 4 selon des consignes établies.

Une première consigne vise à ce que l'air envoyé à la pompe à chaleur ne dépasse pas une température de l'ordre de 40°Celsius, l'air réchauffé est donc éventuellement mélangé avec de l'air froid. Au-delà, l'échangeur ne fonctionne plus ou très mal.

La localisation de ce mélangeur avec les moyens de circulation d'air au niveau des combles ou sous toiture évite d'acheminer au travers de la maison, une conduite d'air chaud et une conduite d'air plus froid jusqu'au réservoir d'eau à chauffer qui couramment est dans le garage au rez de chaussé. Un seul conduit est nécessaire au lieu de deux. Le bruit du moteur étant situé dans les combles est moins perçu au rez de chaussée

Avantageusement, la pompe à chaleur présente, en amont de l'échangeur de chaleur, un bipasse 14 qui est placé en position active lorsque le ballon ne demande pas d'apport calorique ainsi que l'habitation. Cela permet de continuer à refroidir les panneaux photovoltaïques sans faire passer l'air sur l'échangeur. L'air est rejeté à l'extérieur.

Le réservoir comprend des capteurs 15 de température à différent niveaux.

On a donc réalisé une installation autonome qui est simple à mettre en oeuvre.

Pour la gestion de l'installation, la priorité est donnée au réservoir d'eau à chauffer. Ainsi si le réservoir est en demande de calories, on fait fonctionner la pompe à chaleur en optimisant la température de l'air adressé à la pompe.

Lorsque la demande de calories du réservoir est stoppée, on dirige l'air vers l'intérieur de l'habitat ou vers l'extérieur.

Si aucune demande n'est faite pour chauffer l'eau , l'air continue cependant de circuler mais est rejeté par le bipasse et le courant va soit charger des batteries soit être injecté sur le réseau pour être vendu. On utilise donc un pilote 20 de gestion de l'énergie.

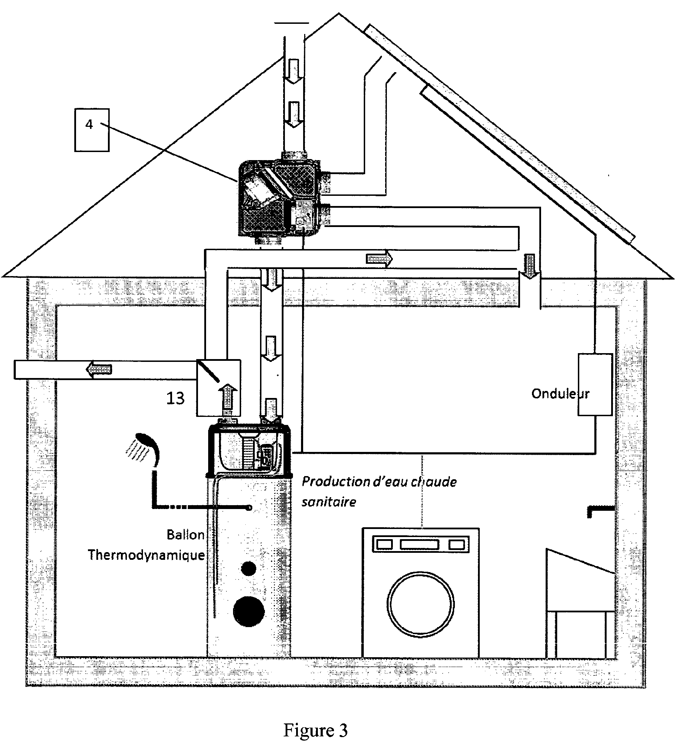

En été, la production d'air refroidi en sortie de l'échangeur du ballon thermodynamique peut être insufflée dans l'habitat pour le rafraichir et valoriser ainsi les frigories. Pour se faire, le ballon est équipé en option d'une vanne trois voies aéraulique (13) qui oriente cet air refroidi vers l'habitat ou l'évacue à l'extérieur s'il n'y a pas de demande de rafraichissement en été (Figure 3). Le module de ventilation étant équipé d'un clapet anti-retour, l'air froid ne peut pas revenir vers celui-ci.

Le ballon ou réservoir d'eau chaude comprend donc un échangeur de chaleur intégré dans une enveloppe commune au réservoir sans la présence d'un moyen de circulation de l'air, celui-ci étant déporté loin du réservoir. Ce réservoir présente des bornes de connexion pour y raccorder un pilote venant au moins prendre la température de l'eau.

Par enveloppe commune, on inclut deux enveloppes superposées.

Le moyen de circulation d'air étant déporté et donc éloigné du réservoir, il sera plus discret et moins bruyant s'il est placé sous la toiture dans les combles.

Un autre avantage c'est que situé en sous toiture et dans un caisson de mélange, lorsque l'on détecte que l'air chaud est trop chaud, on peut rapidement prélever de l'air froid à l'extérieur et le mélanger à l'air trop chaud.

Le moyen de circulation d'air constitué par un extracteur/souffleur logé dans le caisson de mélange est utilisé pour le réservoir d'eau à chauffer mais également pour d'autres taches lorsque l'eau est suffisamment chaude.

La prise de température au niveau du réservoir à différentes hauteur permet de mieux gérer le fonctionnement de l'échangeur. On sait globalement la quantité d'énergie à apporter pour que l'eau soit à la température voulue dans la totalité du réservoir.

Comme cela a été dit, on évite de faire passer dans les pièces habitables deux conduites d'acheminent d'air d'un diamètre de l'ordre de 150 mm. Une seule conduite suffit car le mélange est fait en amont dans les combles.

## Revendications

1. Installation de production d'eau chaude sanitaire par récupération de calories dans l'air mettant en oeuvre un réservoir (2) destiné à contenir de l'eau *chaude sanitaire* et une pompe (3) à chaleur destinée à chauffer d'eau contenue dans le réservoir (2) et comprenant un échangeur (3a) de chaleur et un moyen (3b) de circulation d'air, cette installation comprenant d'une part, au moins un panneau (1) photovoltaïque lequel produit du courant qui alimente les moyens électriques de l'installation et, d'autre part, un circuit d'air qui, pour alimenter la pompe à chaleur, le prélève à l'extérieur, le fait circuler au contact du panneau (1) photovoltaïque pour refroidir le dit panneau et par la même réchauffer l'air envoyé dans l'échangeur (3a) de la pompe à chaleur le moyen (3b) de circulation d'air est *étant* associé avec un module (4) dit de mélange et de distribution d'air *dans le circuit d'air* cette installation étant **caractérisée en ce que** : *l'échangeur (3a) de la pompe à chaleur est intégré dans une enveloppe commune au réservoir (2),* cette installation étant telle que le moyen (3b) de circulation d'air est déporté loin de l'enveloppe commune du réservoir (2) .

2. Installation de production d'eau chaude selon la revendication 1 **caractérisée en ce que** le circuit d'air comprend un canal (1C) sous la paroi (1A) formée des éléments photosensibles du panneau photovoltaïque, le module (4) dit de mélange et de distribution d'air comportant une arrivée (8) d'air frais provenant de l'extérieur, une arrivée (9) de l'air réchauffé, une sortie (10) vers l'échangeur et une sortie (11) pour insuffler de l'air dans l'habitat ainsi que des volets pour contrôler la section de passage des dites entées et sorties.

3. Installation de production d'eau chaude sanitaire selon la revendication 2 **caractérisée en ce que** la pompe (3) à chaleur présente un bipasse (14) en amont de l'échangeur de chaleur qui est placé en position active lorsque ledit *réservoir* (2) ne demande pas d'apport calorique.

4. Installation de production d'eau chaude selon l'une quelconque des revendications précédentes **caractérisée en ce que** le réservoir (2) comprend des capteurs (15) de température à différent niveaux.

5. Installation de production d'eau chaude selon l'une quelconque des revendications précédentes **caractérisée en ce qu'**elle comprend un pilote (20) de gestion des besoins en énergie.

6. Installation de production d'eau chaude selon la revendication 3 **caractérisé en ce qu'**une vanne trois voies aéraulique (13) équipe la sortie de la pompe à chaleur pour diriger le flux air refroidi soit dehors soit dans l'habitat.

7. Installation de production d'eau chaude selon la revendication 1 **caractérisé en ce que** le réservoir présente des bornes de connexion pour y raccorder un pilote (20) venant au moins prendre la température de l'eau.

## Patentansprüche

1. Anlage zur Herstellung von warmem Brauchwasser durch Rückgewinnung von Wärme aus der Luft durch einen Behälter (2) zum Enthalten von warmem Brauchwasser und durch eine Wärmepumpe (3), die zum Heizen des im Behälter enthaltenen Wassers (2) eingerichtet ist und einen Wärmetauscher (3a) und ein Luftumlaufmittel (3b) umfasst, wobei diese Vorrichtung einerseits wenigstens eine Photovoltaikplatte (1), die Strom zur Versorgung der elektrischen Mittel der Anlage erzeugt, und andererseits einen Luftkreislauf zur Versorgung der Wärmepumpe umfasst, der Luft von außen entnimmt, diese in Kontakt mit der Photovoltaikplatte (1) zirkulieren lässt, um diese Platte zu kühlen und dadurch die in den Wärmetauscher (3a) der Wärmepumpe geführte Luft wieder zu erwärmt, wobei das Luftumlaufmittel (3b) mit einem sogenannten Luftmischungs- und verteilungsmodul (4) im Luftkreislauf verbunden ist, wobei diese Anlage **dadurch gekennzeichnet ist, dass**: der Tauscher (3a) der Wärmepumpe in eine mit dem Behälter (2) gemeinsame Umhüllung integriert ist, wobei diese Anlage derart gestaltet ist, dass das Luftumlaufmittel (3b) weg von der mit dem Behälter (2) gemeinsamen Umhüllung versetzt ist.

2. Anlage zur Herstellung warmen Wassers nach Anspruch 1, **dadurch gekennzeichnet, dass** der Luftkreislauf einen Kanal (1C) unter der aus den lichtempfindlichen Elementen der Photovoltaikplatte bestehenden Wand umfasst, wobei das sogenannte Luftmischungs- und verteilungsmodul (4) einen Eingang (8) von Frischluft von außen, einen Eingang (9) für die wieder erwärmte Luft, einen Ausgang (10) zum Tauscher und einen Ausgang (11) zum Einblasen von Luft in den Standort und Klappen hat, um den Durchgangsabschnitt dieser Ein- und Ausgänge zu regeln.

3. Anlage zur Herstellung warmen Brauchwassers nach Anspruch 2, **dadurch gekennzeichnet, dass** die Wärmepumpe (3) stromaufwärts des Wärmetauschers einen Bypass (14) hat, der in Aktivstellung geschaltet wird, wenn dieser Behälter (2) keine Wärmezufuhr verlangt.

4. Anlage zur Herstellung warmen Wassers nach einem der vorherigen Ansprüche, **dadurch gekennzeichnet, dass** der Behälter (2) Temperatursensoren (15) an verschiedenen Niveaus enthält.

5. Anlage zur Herstellung warmen Wassers nach einem der vorherigen Ansprüche, **dadurch gekennzeichnet, dass** sie einen Regler (30) enthält, um die Energiehedürfnisse zu regeln.

6. Anlage zur Herstellung warmen Wassers nach Anspruch 3, **dadurch gekennzeichnet, dass** der Ausgang der Wärmepumpe mit einer lufttechnischen 3-Wege-Klappe (13) ausgestattet ist, um den abgekühlten Luftstrom nach außen oder an den Standort zu richten.

7. Anlage zur Herstellung warmen Wassers nach Anspruch 1, **dadurch gekennzeichnet, dass** der Behälter Anschlussklemmen zum Anschluss eines Reglers (20) hat, der wenigstens die Wassertemperatur aufnimmt.

## Claims

1. Facility for producing domestic hot water by recovering calories in the air using a tank (2) designed to contain domestic hot water and a heat pump (3) designed to heat the water contained in the tank (2) and comprising a heat exchanger (3a) and an air circulating means (3b), said facility comprising on the one hand at least one photovoltaic panel (1) which produces current that supplies the electric means of the facility, and on the other hand an air circuit which, in order to supply the heat pump, takes air from outside, circulates it in contact with the photovoltaic panel (1) so as to cool said panel and at the same time heat the air sent into the exchanger (3a) of the heat pump, the air circulating means (3b) being associated with an air mixing and distributing module (4) in the air circuit, said facility being **characterized in that** the exchanger (3a) of the heat pump is integrated in a common casing with the tank (2), said facility being such that the air circulating means (3b) is at a considerable distance from the common casing of the tank (2).

2. Facility for producing hot water according to claim 1, **characterized in that** the air circuit comprises a channel (1C) below the wall (1A) formed of the photosensitive elements of the photovoltaic panel, the air mixing and distributing module (4) comprising an inlet (8) for fresh air coming from the outside, an inlet (9) for the heated air, an outlet (10) to the exchanger and an outlet (11) for blowing air into the home as well as flaps for controlling the passage cross-section of said inlets and outlets.

3. Facility for producing domestic hot water according to claim 2, **characterized in that** the heat pump (3) has a bypass (14) upstream of the heat exchanger, which bypass is placed in the active position when said tank (2) is not demanding any calorie input.

4. Facility for producing hot water according to any one of the preceding claims, **characterized in that** the tank (2) comprises temperature sensors (15) at different levels.

5. Facility for producing hot water according to any one of the preceding claims, **characterized in that** it comprises a controller (20) for managing energy requirements.

6. Facility for producing hot water according to claim 3, **characterized in that** a three-way air valve (13) equips the outlet of the heat pump so as to direct the cooled air flow either outside or into the home.

7. Facility for producing hot water according to claim 1, **characterized in that** the tank has connection terminals for connecting thereto a controller (20) which senses at least the temperature of the water.
